# EUROPEAN PATENT APPLICATION

(11) **EP 1 136 859 A2**
(43) Date of publication of application: **26.09.2001**
(21) Application number: 01102910.5
(22) Date of filing: 07.02.2001
(51) Int. Cl.: G02B 6/38, G02B 6/42

(54) **Receptacle type optical fiber connector and optical communication module using the same**

(30) Priority: 28.02.2000 JP 2000055979
(71) Applicant: ALPS ELECTRIC CO., LTD., Ota-ku Tokyo (JP)
(72) Inventor: Okochi, Ken, c/o Alps Electric Co., Ltd., Tokyo (JP); Kikuchi, Kimihiro, c/o Alps Electric Co., Ltd., Tokyo (JP)
(74) Representative: Klunker . Schmitt-Nilson . Hirsch

(57) **Abstract**

An optical fiber connector including a receptacle housing (21) and a cylindrical member (25) disposed within the receptacle housing, with fine pores for taking dust therein being formed in an inner wall of the cylindrical member (27a,27b), wherein a ferrule (103) provided at a tip end of an optical fiber is inserted into the cylindrical member, allowing dust which has entered the cylindrical member to be received within the fine pores, an outer periphery of the ferrule is brought into abutment against the inner wall of the cylindrical member, and the tip end of the optical fiber is attached to the receptacle housing.

## Description

### BACKGROUND OF THE INVENTION

### Field of the Invention

The present invention relates to an optical fiber connector for optically connecting an optical fiber with an optical member or an optical fiber, as well as an optical communication module using the same.

### Description of the Prior Art

Generally, an optical communication module has a configuration wherein an optical member such as laser diode or lens and an optical connector as an optical fiber connector are rendered integral with each other and laser beam emitted from the laser diode is condensed by a lens and is then optically coupled into an optical fiber.

An optical communication module with an optical fiber mounted removably to the body of the module is called a receptacle type.

As optical connectors there are known a type which uses screws for connection and a type which makes connection by snap-fitting.

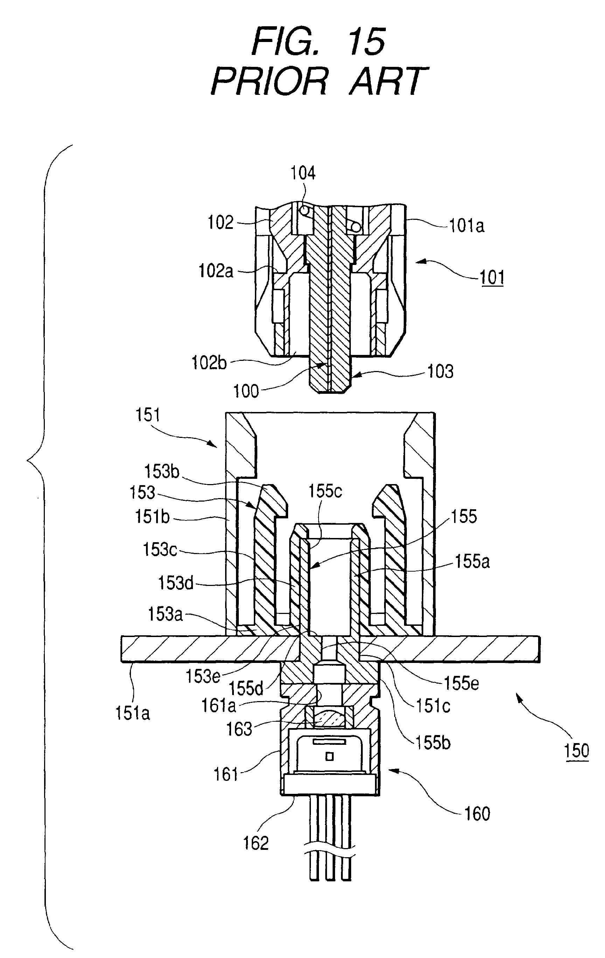

As shown in Fig. 15, a conventional optical connector 150 is provided with a stainless steel housing 151. The housing 151 is made up of a flat plate-like base 151a having a small circular hole 151c formed centrally and a cylindrical outer peripheral portion 151b provided integrally on the base 151a.

A resinous clamper 153, which is reinforced with glass fibers, is made up of a base portion 153a, a pair of leg portions 153c erected integrally on the base portion 153a having elastic pawls 153b at respective tip ends, and a cylindrical portion 153d also erected integrally on the base portion 153a and between the leg portions 153c. In the base portion 153a is formed a circular hole 153e the size of which is equal to the size of the circular hole 151c formed in the base 151a. The clamper 153 is received into the housing 151 in such a manner that the circular hole 151c of the housing 151 and the circular hole 153e of the clamper 153 are aligned with each other.

A sleeve 155 is made up of a long, thin-walled, cylindrical portion 155a and a flange portion 155b which is integral with a base end of the long cylindrical portion 155a. A tip end of the long cylindrical portion 155a is formed as a circular opening 155c. An inner wall of the long cylindrical portion 155a is formed by cutting so as to have an accurate inside diameter from the circular opening 155c to an inner wall-side bottom 155d of the cylindrical portion 155a.

In the bottom 155d is formed a through hole 155e for passing therethrough of incoming or outgoing light, the through hole 155e extending to the underside of the flange portion 155b. The surface of the bottom 155d serves as an abutting surface against which an end face of an optical fiber to be described later comes into abutment.

The sleeve 155 is mounted so that an outer periphery of its long cylindrical portion 155a is positioned within both the cylindrical portion 153d of the clamper 153 and the circular hole 151c of the base 151a and so that an upper surface of the flange portion 155b is abutted against the underside of the base 51a.

An optical member 160 comprises an optical element 162 such as a semiconductor laser for example and a lens 163. The optical member 160 is accommodated within a cylindrical holder 161 in such a manner that the lens 163 is positioned centrally and the optical element 162 is positioned at one end of the holder. In the opposite end of the holder 161 is formed a through hole 161a so that light emitted from the optical element 162 can go out through the lens 163.

The opposite end face (upper surface) of the holder 161 with the through hole 161a formed therein is brought into abutment against the underside of the flange portion 155b of the sleeve 155 and is fixed thereto by welding.

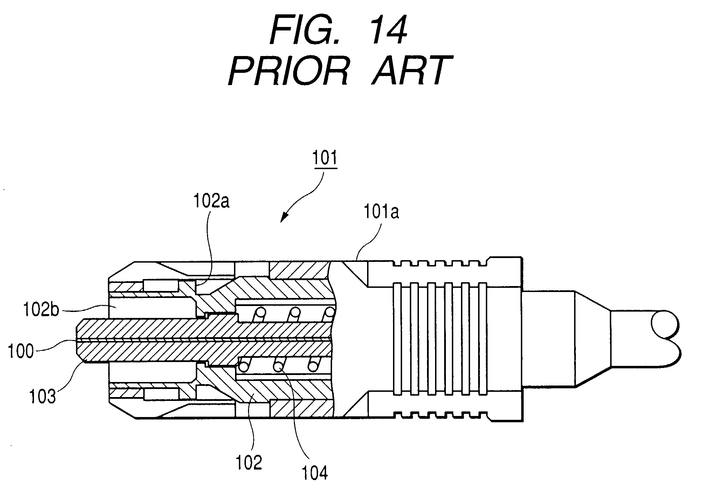

As shown in Fig. 14, a plug 101 is provided with a plug body 101a, a cylindrical ferrule holding member 102 received within the plug body 101a, and a ceramic ferrule (fiber holding portion) 103 received within the ferrule holding member 102.

The ferrule holding member 102 is formed with a grooved, elastic retaining portion 102b in an outer peripheral wall 102a thereof and is also formed with a circular hole in a tip end portion thereof.

An optical fiber 100 is incorporated beforehand into the ferrule 103 and a tip end face of the ferrule 103, together with a tip end face of the optical fiber 100, is polished into a predetermined shape and is finished specularly.

Within the plug body 101a the ferrule 103 is urged elastically in a direction in which the tip end of the ferrule 103 projects to the exterior (leftwards in Fig. 14) by means of a coiled spring 104. An outer peripheral wall of the ferrule 103 is retained by engagement with an inner wall of the ferrule holding member 102. In this state, the tip end of the ferrule 103 projects slightly from a tip end face of the plug body 101a while being positioned within the hole 102b.

Next, a description will be given below about in what manner the plug 101 is attached to the optical connector 150 thus constructed.

First, as shown in Fig. 15, a tip end side of the plug 101 is brought face to face with the open end side of the housing 151 and is positioned there, as shown in Fig. 15.

When the tip end portion of the plug 101 is inserted into the open end of the housing 151, the paired leg portions 153c of the clamper 153 strike against the tip end portion of the plug 101 and expand thereby, the plug body 101a advances into the housing 151, an outer periphery of the ferrule holding member 102 is positioned between the leg portions 153c, the ferrule 103 advances into the long cylindrical portion 155c of the sleeve 155, the tip end face of the ferrule 103 comes into elastic contact with the bottom (abutting surface) 155d of the sleeve 155, and the paired elastic pawls 153b of the clamper 153 are snap-fastened to the elastic retaining portion 102a of the plug 101.

Thus, in the connection between the optical connector 150 and the plug 101, the ferrule 103 of the plug 101 is fitted in the interior of the sleeve 155; besides, the leg portions 153c are deflected in directions different from the inserting direction of the plug 101 and deflecting directions of the elastic pawls. Therefore, the plug 101 is prevented from being easily removed even by a plug removing operation.

In the conventional optical connector 150 it has been necessary that the clearance between the inserted ferrule 103 and the sleeve 155 be kept small in order to hold the ferrule with a high accuracy within the sleeve 155.

If the clearance is made extremely small, an outer periphery of the ferrule is rubbed against the inner wall of the sleeve 155 and very small dust, which has entered the clearance in the sleeve 155 will damage the outer periphery of the ferrule 103 and the inner wall surface of the sleeve, with consequent deterioration of the accuracy so far maintained, thus giving rise to the problem that the state of optical coupling is deteriorated as the insertion of the ferrule 103 into the sleeve 155 is repeated.

### SUMMARY OF THE INVENTION

It is an object of the present invention to provide an optical fiber connector capable of preventing damage to the surface of a fiber holding portion which holds one end of an optical fiber therein and also preventing damage to the surface of a cylindrical body into which the fiber holding portion is inserted.

According to the first means adopted in the present invention for solving at least one of the above problems there is provided an optical fiber connector which is provided with a receptacle housing and a cylindrical member disposed within the receptacle housing and wherein pits for taking dust therein are formed in an inner wall of the cylindrical member, a fiber holding portion provided at a tip end of an optical fiber is inserted into the cylindrical member, allowing dust which has entered the cylindrical member to be received within the pits, an outer periphery of the fiber holding portion is brought into abutment against the inner wall of the cylindrical member, and the tip end of the optical fiber is attached to the receptacle housing.

According to the second means adopted in the present invention, at least the inner wall of the cylindrical member is formed using a porous material, and the pits are formed in the porous material innumerably.

According to the third means adopted in the present invention, a sintered compact of a metal or a ceramic material is used as the porous material.

According to the fourth means adopted in the present invention there is provided an optical communication module using the optical fiber connector wherein an optical member which emits or receives light is fixed to the exterior of the receptacle housing of the optical connector, and an optical axis of the optical fiber attached to the receptacle housing and an optical axis of the optical member are aligned with each other.

### BRIEF DESCRIPTION OF THE DRAWINGS

Fig. 1 is a sectional view showing an optical fiber connector (an optical communication module) according to the first embodiment of the present invention;
Fig. 2 is an enlarged sectional view of principal portions of the optical fiber connector according to the first embodiment;
Fig. 3 is an enlarged exploded view of the principal portions;
Fig. 4 is an enlarged exploded view of the principal portions;
Figs. 5A and 5B illustrate an outer cylinder in the optical fiber connector of the first embodiment, in which Fig. 5A is a plan view thereof and Fig. 5B is a longitudinal sectional view thereof;
Fig. 6 is a longitudinal sectional view showing an inner cylinder in the optical fiber connector of the first embodiment;
Fig. 7 is a state explaining diagram which schematically illustrates an inner wall surface of the inner cylinder shown in Fig. 6;
Fig. 8A is a plan view showing an elastic member used in the optical fiber connector of the first embodiment, and Figs. 8B and 8C are plan views showing second and third modifications, respectively, of the elastic member;
Fig. 9 is a perspective view showing a modification of the inner cylinder used in the optical fiber connector of the first embodiment;
Fig. 10 is a sectional view showing a state in which an optical fiber is connected to the optical fiber connector of the first embodiment by inserting a plug of the optical fiber into the connector;
Fig. 11A is an enlarged sectional view of a principal portion, showing a state near the elastic member, with the plug fitted in the optical fiber connector of the first embodiment, and Figs. 11B and 11C are enlarged sectional views of principal portions, with plugs fitted in the optical fiber connectors containing the elastic members of the second and third modifications, respectively;
Fig. 12 is an enlarged sectional view of principal portions of an optical fiber connector according to the second embodiment of the present invention;
Fig. 13 is an enlarged sectional view of principal portions of an optical fiber connector according to the third embodiment of the present invention;
Fig. 14 is a sectional view of a plug which holds a tip end of an optical fiber; and
Fig. 15 is a sectional view showing an optical fiber connector and an optical fiber plug both used in the prior art.

### DETAILED DESCRIPTION OF THE PREFERRED EMBODIMENTS

An optical fiber connector 20 according to the first embodiment of the present invention will be described hereinunder with reference to the accompanying drawings.

As to a plug having a ferrule with a tip end of an optical fiber incorporated therein, it is of the same construction and function as the plug 101 described above, so will be identified by the same reference numerals and an explanation thereof will be omitted.

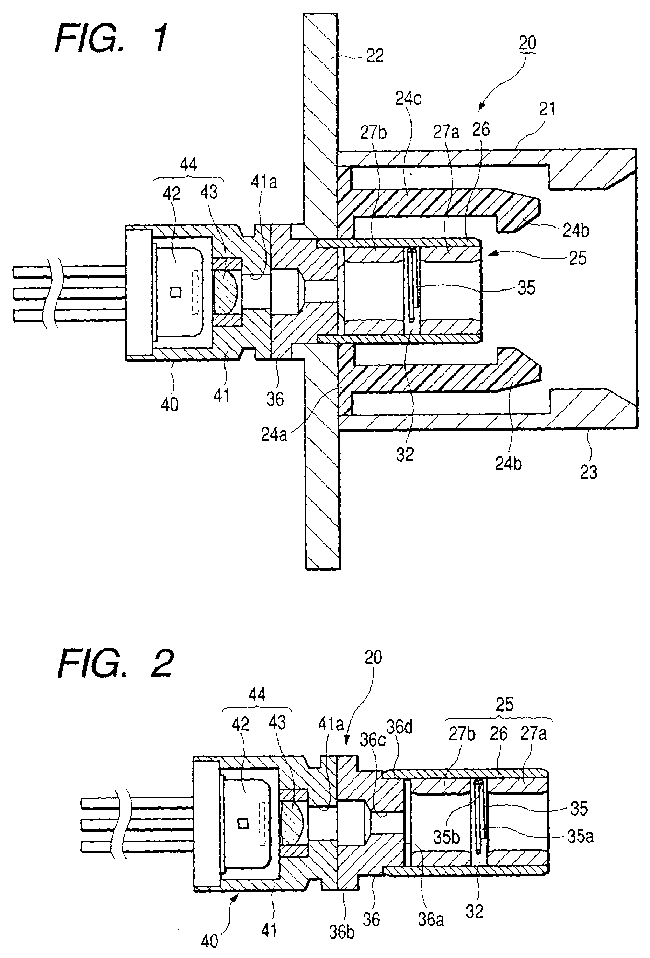

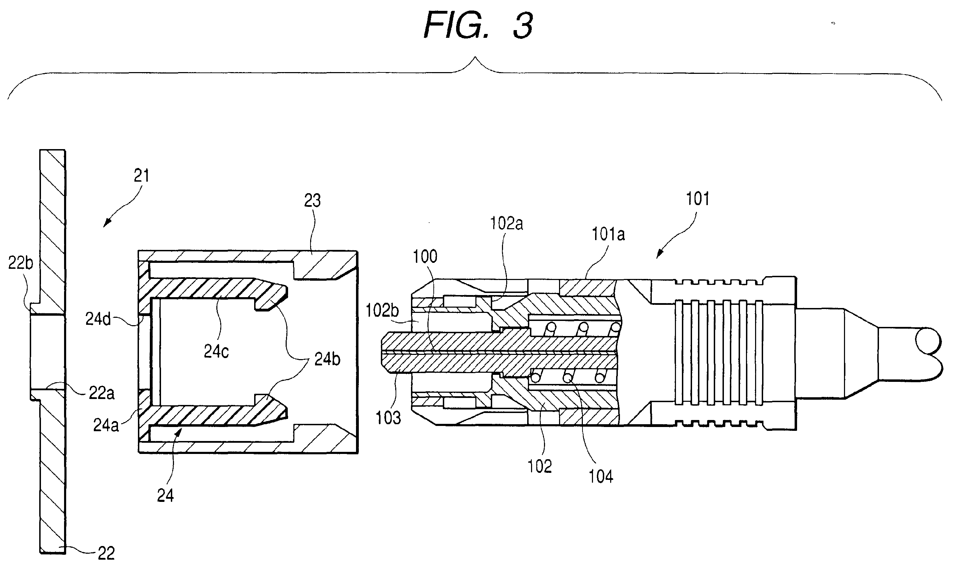

As shown in Figs. 1 and 3, a receptacle housing 21 of the optical fiber connector 20 is made up of a stainless steel base 22 which is in the shape of a square flat plate, a cylindrical outer peripheral portion 23 made of stainless steel and placed on the base 22, and a cylindrical clamper 24 made of resin and reinforced with glass fibers, the clamper 24 being disposed within the receptacle housing 21.

Nearly centrally of the base 22 is formed a circular hole 22a. A peripheral edge portion of the circular hole 22a formed in the base 22 projects slightly outwards as a projecting edge portion 22b.

The clamper 24 is made up of a flat plate-like base portion 24a and a pair of leg portions 24c erected integrally on the base portion 24a and having elastically deformable pawls 24b at respective tip ends.

A circular hole 24d is formed at approximately central part of the base portion 24a, the circular hole 24d having a size equal to the size of the circular hole 22a formed in the base 22. The base portion 24a of the clamper 24 is disposed on the base 22 while aligning the circular hole 24d of the base portion 24 and the circular hole 22a of the base 22 with each other. In this state, an outer peripheral edge of the base portion 24a is fitted in the outer peripheral portion 23 of the receptacle housing 21.

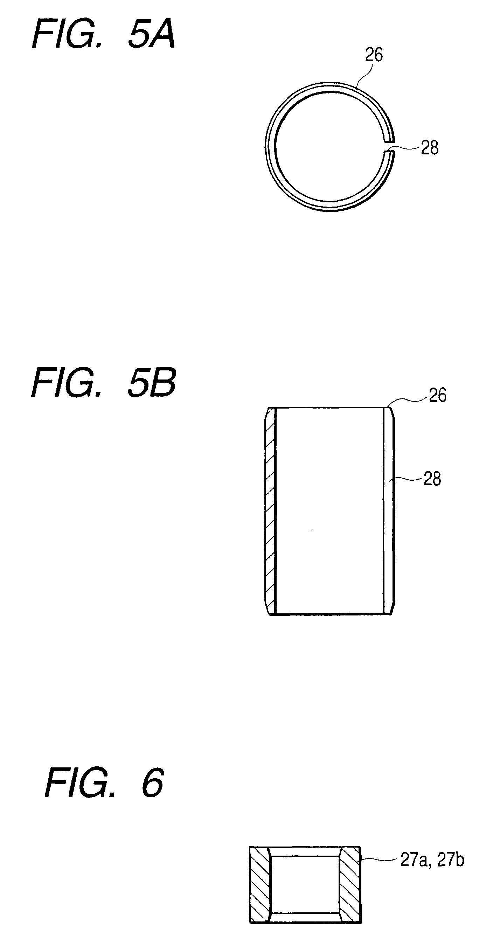

Next, as shown in Figs. 2 and 5A, 5B, a cylindrical member 25 is composed of one outer cylinder 26 and two inner cylinders 27a, 27b.

The outer cylinder 26 is made of stainless steel having an elastic urging force, with a slit 28 being formed in an outer periphery of the outer cylinder 26 in an axial direction of the cylinder. With the slit 28, the outer cylinder 26 can undergo elastic deformations in its radial direction.

As shown in Figs. 2 and 6, the inner cylinders 27a and 27b are each constituted by a cylindrical, hard, somewhat thick-walled, sintered compact of a metal such as stainless steel.

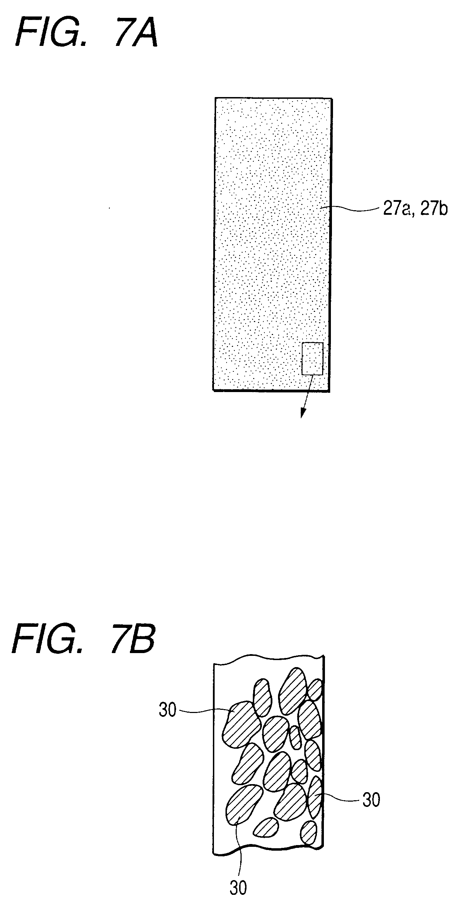

As shown in Fig. 7, innumerable fine pores 30 having air permeability are formed in the surfaces of the inner cylinders 27a and 27b constituted by a sintered metal compact, e.g., stainless steel. Inner walls of the inner cylinders 27a and 27b have smooth surfaces with innumerable fine pores 30 formed therein and are formed more accurately on one end side thereof.

Conditions of such as the size of the fine pores 30 are controlled by adjusting the sintering time. The sintered metal compact of each of the inner cylinders 27a and 27b has a structure which satisfies a volume proportion of 70% and a contained air proportion of 30%.

The structure of the inner cylinders 27a and 27b is not specially limited insofar as fine pores are formed in their surfaces, nor is limited their material to stainless steel. There may be used a sintered compact of a ceramic material such as zirconia.

As shown in Fig. 1, the inner cylinders 27a and 27b are received within the outer cylinder 26 so as to be in predetermined axially spaced positions, and a concave gap portion (recess) 32 is formed in an inner wall of the outer cylinder 26 and between the inner cylinders 27a and 27b.

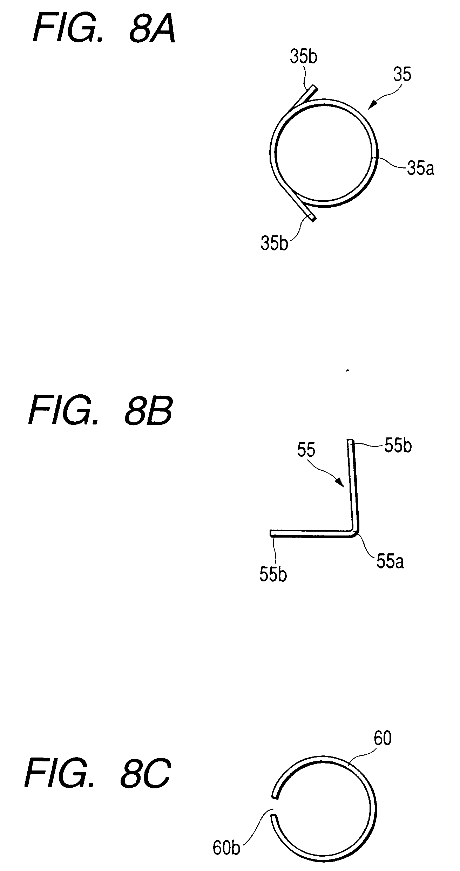

As shown in Fig. 8A, a wire spring 35 as an elastic member is formed by a wire ring coiled at least once and is composed of a ring portion 35a having an inside diameter smaller than the outer periphery of a ferrule 103 and end portions 35b projecting outwards from the ring portion 35a.

As shown in Fig. 2, the end portions 35b of the wire spring 35 are engaged within the gap portion 32 of the cylindrical member 25 and the ring portion 35a thereof is disposed in a radial space within the cylindrical member 25.

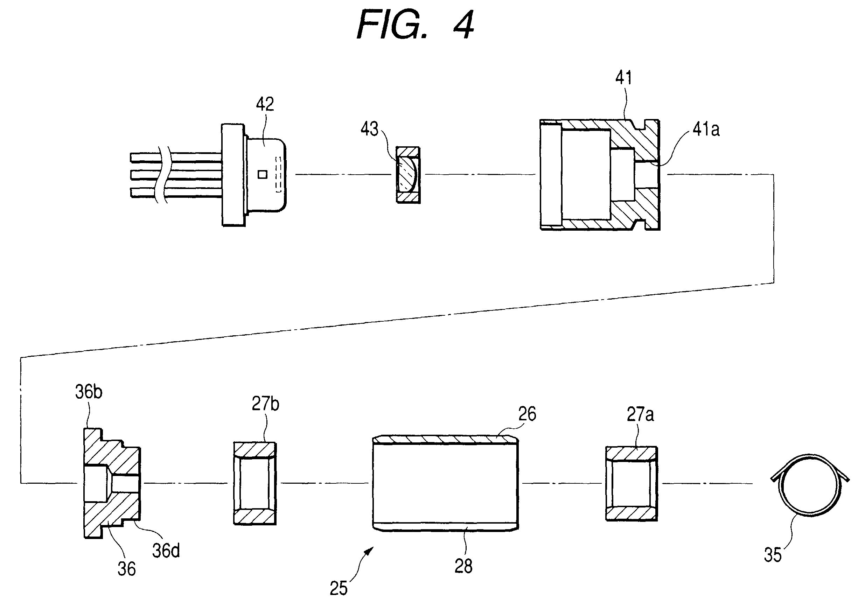

As shown in Figs. 2 and 4, a stopper 36 is formed of stainless steel in a generally cylindrical shape, with a flange 36b being formed on one end side. A light guide hole 36c having a circular cross section and a stepped longitudinal section is formed in the stopper 36 so as to extend from an upper surface 36a of the stopper axially through the stopper toward the flange 36b. The upper surface 36a of the stopper 36 is finished flatways with a high accuracy and serves as an optical fiber abutting surface with which a tip end of the ferrule 103 comes into elastic contact in alignment with the light guide hole 36c.

An outer periphery on the upper surface 36a side of the stopper 36 is formed with a stepped peripheral edge portion 36d slightly smaller in diameter, and an inner wall portion on one end side of the outer cylinder 26 is in abutment against the peripheral edge portion 36d.

As shown in Fig. 2, an optical mechanism 40 is comprised of a cylindrical stainless steel holder 41 having a bottom on one end side thereof, and an optical element 42 such as a semiconductor laser and a lens 43 both received within the holder 41 and constituting an optical member 44.

The lens 43 is disposed centrally of the holder 41, while the optical element 42 is disposed on the opposite open end side, and a through hole 41a, from which light emitted from the optical element 42 is to pass through the lens 43 to the exterior, is formed in the bottom of the holder 41.

The components of the optical member 44 are mounted and fixed in the holder 41 while being established their positions so that their optical axes are aligned with each other.

Further, the end face of the holder 41 with the through hole 41a formed therein is fixed to the flange 36b of the stopper 36. In this state, an optical axis of the optical member 44 and that of an optical fiber 100 inserted into the optical fiber connector 20 are aligned with each other.

Now, with reference to Figs. 3 and 4, the following description is provided about how to assemble the optical fiber connector (optical communication module) 20 thus constructed.

First, as shown in Fig. 4, one outer cylinder 26 and two inner cylinders 27a and 27b are provided for assembling the cylindrical member 25.

The outer cylinder 26 is formed by machining a stainless steel plate of a uniform thickness cylindrically so as to have a predetermined slit 28, whereby it is endowed with an elastic urging force which acts to return to the original shape when an external force is applied to the outer cylinder.

The inner cylinders 27a and 27b have been subjected to sintering under predetermined temperature and time conditions and subsequent cooling to room temperature, whereby innumerable fine pores 30 are formed in their inner walls.

Next, the inner cylinder 27a is inserted into the outer cylinder 26 up to the position where the stopper 36 to be described later is mounted. As a result, the outer cylinder 26 is elastically deformed and widened radially through the slit 28, thereby permitting smooth insertion of the inner cylinder 27a.

Further, the outer cylinder 26 and the inner cylinder 27a are mounted and fixed by spot welding with use of YAG (yttrium aluminum garnet) laser for example.

Next, the wire spring 35 is inserted into the cylindrical member 25 thus assembled integrally by the outer cylinder 26 and the inner cylinder 27a, allowing its end portions 35b and part of the ring portion 35a to be engaged with the cylindrical member 25.

Both end portions 35b of the wire spring 35 bite into the wall of the gap portion 32 formed in the cylindrical member 25 wedgewise with their urging force, whereby the whole of the wire spring 35 is prevented from rotating within the cylindrical member 25 and the wire spring is mounted and fixed positively so as to prevent both end portions 35b from projecting inwards with respect to the inner wall of the inner cylinder 27a. The ring portion 35a of the wire spring 35 thus mounted has a diameter somewhat larger than the diameter of the ferrule 103. Before insertion of the ferrule, the ring portion 35a is in an inwardly deviated position with respect to the inner wall of the inner cylinder 27a, and upon insertion of the ferrule the ring portion 35a can move radially (perpendicularly to the optical axis).

Next, the inner cylinder 27b is inserted into the outer cylinder 26 in the inserted direction of the wire spring 35 and is fixed by spot welding with use of YAG laser for example, whereby the outer cylinder 26 after the insertion is prevented from undergoing an elastic deformation. In this way the inner cylinder 27a, wire spring 35 and the inner cylinder 27b are arranged axially along the inner wall of the outer cylinder 26, and the gap portion 32 with the wire spring 35 received therein is formed between the inner cylinders 27a and 27b.

Even if the outer peripheral walls of the inner cylinders 27a and 27b are somewhat different in the size of diameter, both inner cylinders are aligned with each other because they are disposed in relation to their axes under the elastic urging force of the outer cylinder 26.

In the receptacle housing 21, as shown in Fig. 3, the clamper 24 is inserted into the outer peripheral portion 23 from one open end side of the outer peripheral portion, allowing the outer peripheral edge of the base portion 24a of the clamper 24 to be fitted in an inner wall of the outer peripheral portion 23, then the base portion 24a of the clamper 24 and the outer peripheral portion 23 are put on the base 22 in such a manner that the circular hole 24d of the clamper 24 and the circular hole 22a of the base 22 are aligned with each other, followed by spot-welding predetermined portions with use of YAG laser for example, to assemble the receptacle housing 21.

Next, for mounting the cylindrical member 25 with the wire spring 35 fitted therein and the stopper 36 to the receptacle housing 21, first the peripheral edge portion 36d of the stopper 36 is inserted into the outer cylinder 26.

As the peripheral edge portion 36d is in sliding contact with the inner wall of the outer cylinder 26, a mounting portion formed at an end of the outer cylinder 26 is fitted on the peripheral edge portion 36d. Next, predetermined portions are welded by the foregoing spot welding to mount and fix the cylindrical member 25 and the stopper 36 integrally to each other.

Next, the cylindrical member 25 and the stopper 36 thus united are inserted into the circular hole 22a formed in the base 22 of the receptacle housing 21. The projecting edge portion 22b of the base 22 of the receptacle housing 21 is brought into abutment against the flange 36b of the stopper 36 and predetermined portions are welded for mounting and fixing the cylindrical member 25 and the stopper 36 to the receptacle housing 21. In this way the optical fiber connector 20 is completed.

Next, the optical mechanism 40 which has been assembled with the optical member 44 received within the holder 41 is attached to the optical fiber connector 20.

The flange portion 36b of the stopper 36 in the optical fiber connector 20 and the bottom of the holder 41 in the optical mechanism 40 are held while making X-Y adjustment using a jig (not shown) so that the optical axis of laser beam emerging from the optical element 42 and the optical axis thereof after passing through the lens are aligned with the optical axis of an optical fiber which has been fitted beforehand as an aligning jig into the cylindrical member 25. Then, predetermined portions are welded by spot welding to mount and fix the optical mechanism 40 to the optical fiber connector 20. At this time, with the biasing force of the wire spring 35, the outer periphery of the optical fiber is urged in a certain direction into close contact with the inner walls of the inner cylinders 27a and 27b of the cylindrical member 25, and with the thus-closely contacted surfaces as reference surfaces there is performed alignment of the optical axes. In this way there is completed an optical communication module using the optical fiber connector 20.

Reference will be made below to a method for mounting the plug 101 of the optical fiber 100 to the optical fiber connector (optical communication module) 20.

First, a tip end side of the plug 101 is brought face to face with the open end side of the receptacle housing 21 of the optical fiber connector 20.

Then, the tip end of the plug 101 is inserted into the open end of the receptacle housing 21, with the result that the paired leg portions 24c of the clamper 24 strike against the tip end portion of the plug 101 and expand and the plug body 101a advance into the receptacle housing 21 while an outer periphery of the ferrule holding member 102 slides in contact with the leg portions 24c of the clamper 24 and the ferrule 103 slides in contact with the inner walls of the inner cylinders 27a and 27b. Then, the tip end face of the ferrule 103 comes into elastic contact with the upper surface 36a of the stopper 36 by virtue of a coiled spring 104 and the elastic pawls 24b of the clamper 24 are snap-fastened to an elastic retaining portion 102a of the plug 101.

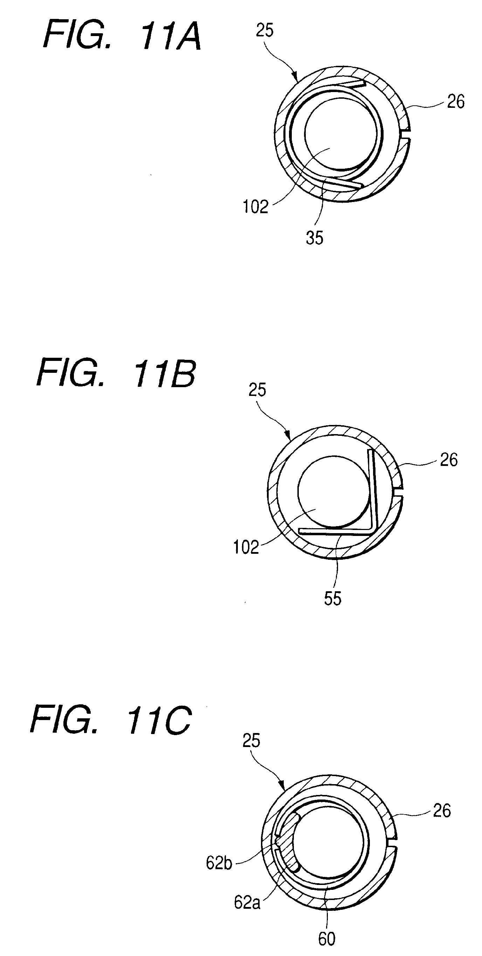

As shown in Fig. 11A, when the ferrule 103 of the plug 101 is inserted into the cylindrical member 25, the ring portion 35a of the wire spring 35 moves radially and its elastic urging force causes an outer periphery of the ferrule 103 to be urged elastically in a direction orthogonal to the optical axis of the optical fiber 100 (radially of the ring portion 35a) and be brought into abutment against a predetermined position (the foregoing reference surface) of an inner wall of the cylindrical member 25 (inner cylinders 27a and 27b).

In the inner wall of the cylindrical member 25, the portion close to the open end of the inner cylinder 27a and the portion near the ferrule abutting surface (upper surface) of the inner cylinder 27b are finished to give a highly accurate inside diameter, so that the outer periphery of the ferrule 103 thus abutted against the inner wall of the cylindrical member is radially positioned with a high accuracy.

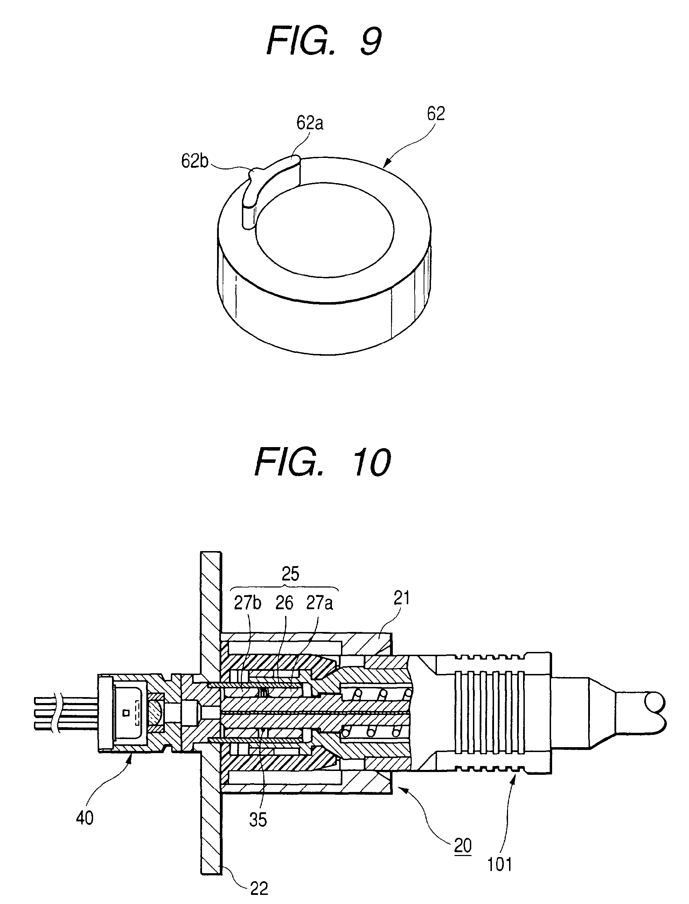

In this way the optical fiber 100 is attached to the optical fiber connector (optical communication module) 20 (see Fig. 10). Consequently, a divergent light emitted from the optical element 42 is condensed by the lens 43 and the light emitted from the lens 43 is coupled highly accurately to an end face of the optical fiber 100 within the ferrule 103 of the plug 101.

Although in the optical fiber connector 20 according to the first embodiment of the invention the wire spring 35 is formed to have the ring portion 35a which is like an O-ring, the shape of the wire spring is not specially limited insofar as it is an elastic member capable of urging the ferrule 103 of the plug 101 radially elastically. Even a molded product having a flexible portion is employable. However, in view of working temperature and durability it is preferable that the wire spring 35 be constituted by a metallic wire spring or plate spring.

For example, as shown in Fig. 8B, a wire spring 55 according to the second modification is formed by a V-bent wire rod, having a bent portion 55a and two end portions 55b.

As shown in Fig. 11B, the bent portion 55a and end portions 55b of the wire spring 55 are engaged into the concave gap portion (recess) 32 of the cylindrical member 25.

The portion between the bent portion 55a and one end portion 55b and the portion between the bent portion 55a and the other end portion 55b strike against the outer periphery of the ferrule 103 of the inserted plug 101 and expand, and with the resulting elastic urging force, the outer periphery of the ferrule 103 is brought into radial elastic contact with the inner walls of the inner cylinders 27a and 27b.

The wire spring 55 is retained within the gap portion 32 of the cylindrical member 25 with its own elastic biasing force and is thereby prevented from rotation.

As shown in Fig. 8C, a wire spring 60 as the third modification of the elastic member is constituted by a C-shaped wire rod having a partially cutout portion 60b.

As shown in Fig. 9, an inner cylinder 62 has a shape associated with the wire spring 60; it has a convex, projecting portion 62a formed on a peripheral edge portion of one end thereof. Further, the projecting portion 62a is formed with a protuberance 62b which slightly projects radially outwards of the inner cylinder 62.

The wire spring 60 is put on the end face of the inner cylinder 62 circumferentially so that its cutout portion 60b is positioned in opposition to the protuberance 62b of the projecting portion 62a, that is, the protuberance 62b is sandwiched elastically between both ends of the wire spring 60.

As shown in Fig. 11C, the plug 101 is inserted into the optical fiber connector 20 using the inner cylinder 62 instead of the inner cylinder 27b and with the wire spring 60 fitted in the inner cylinder 62. The wire spring 60 is expanded its diameter by the outer periphery of the ferrule 103 and both end portions (cutout portion 60b) which sandwich the protuberance 62b of the wire spring 60 also expand. The wire spring 60, as a result of its elastic deformation, presses the outer periphery of the ferrule 103 elastically, causing the ferrule outer periphery to come into abutment against the inner walls of the inner cylinders 27a, 62 and the projecting portion 62a.

The rotation of the wire spring 60 is prevented because it is engaged with the protuberance 62b of the inner cylinder 62.

At the time of inserting the plug 101 into the optical fiber connector 20, if dust or the like adheres to the inner wall of the cylindrical member 25 or enters the interior of the cylindrical member with the insertion of the plug, the dust will be received into the fine pores 30 (see Fig. 7) of the sintered compact of stainless steel as the porous material which constitutes the inner wall of the cylindrical member 25, as the ferrule 103 is inserted into the connector.

It suffices for the inner walls of the inner cylinders 27a and 27b or 62 of the cylindrical member 25 to be formed at least by a porous sintered compact of stainless steel. If a large proportion of fine pores 30 are formed in the inner cylinder 27a which is located on the insertion side of the plug 101, dust will be received into the fine pores 30 in the initial stage of plug insertion.

Since the cylindrical member 25 is formed by an air-permeable porous material, when the plug 101 is inserted into the optical fiber connector 20, air which is present in the clearance between the cylindrical member 25 and the ferrule 103 passes through the fine pores 30 of the cylindrical member 25, whereby the compression of air at the time of plug insertion is suppressed and smooth insertion is ensured.

Thus, fine dust which has entered at the time of inserting the ferrule 103 into the inner cylinders 27a and 27b of the cylindrical member 25 is captured by the fine pores 30 of the porous material, whereby the inner walls of the inner cylinders 27a and 27b of the cylindrical member and the surface of the ferrule 103 can be prevented from being damaged.

Consequently, even if the insertion and removal of the ferrule with respect to the cylindrical member 25 are repeated at the time of insertion and removal of the plug 101 into and from the optical fiber connector 20, it is possible to ensure a stable state of optical coupling.

Besides, the use of a sintered compact of metal easy to be machined permits the provision of the optical fiber connector 20 at a low cost.

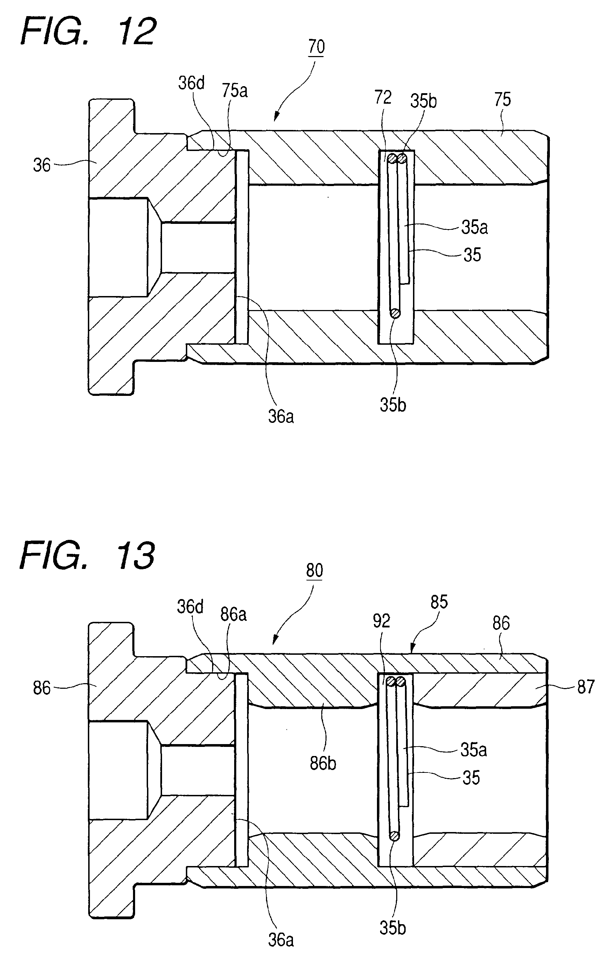

Referring now to Fig. 12, there is illustrated an optical fiber connector 70 according to the second embodiment of the present invention.

The optical fiber connector 70 has a housing different in construction from the housing used in the optical fiber connector 20, but other components thereof are common to those of the optical fiber connector 20, so are identified by the same reference numerals and detailed explanations thereof will be omitted.

As shown in Fig. 12, a cylindrical member 75 is constituted by a single cylindrical, porous, sintered compact of stainless steel, and a concave recess 72 is formed in an inner wall of the cylindrical member 75 circumferentially and nearly centrally by cutting as a secondary operation.

On one end side of the cylindrical member 75 is formed a thin-walled, stepped portion 75a by cutting out the inner wall of the cylindrical member. The upper surface 36a and peripheral edge portion 36d of the stopper 36 are fitted in the stepped portion 75a.

As is the case with the first embodiment, the wire spring 35 is fitted partially (at end portions 35b) in the recess 72 of the cylindrical member 75 in an elastically urged state and the ring portion 35a of the wire spring 35 projects to the inner space defined by the inner wall of the cylindrical member 75.

When the ferrule 103 provided at the tip end of the optical fiber 100 is inserted into the cylindrical member 75 for attaching the plug 101 to the optical fiber connector 70 constructed as above, the ferrule advances while its outer periphery is in sliding contact with the ring portion 35a of the wire spring 35, so that the ring portion 35a moves radially, and the tip end of the ferrule 103 comes into elastic contact with the upper surface 36a of the stopper 36 by virtue of the coiled spring 104. Further, with the elastic biasing force of the wire spring 35, the outer periphery of the ferrule 103 is pressed elastically in a direction orthogonal to the optical axis of the optical fiber 100 and is abutted against the reference surface of the inner wall of the cylindrical member 75, whereby it is held positively.

Even if the wire spring 35 accommodated in the cylindrical member 75 of the optical fiber connector 70 is substituted by the wire spring 55 (see Fig. 8B), it is possible to effect mounting of the plug 101.

Referring now to Fig. 13, there is illustrated an optical fiber connector 80 according to the third embodiment of the present invention.

The optical fiber connector 80 has a housing different in construction from the housings of the optical fiber connectors 20 and 70, but other components are the same as those of the optical fiber connectors 20 and 70, so are identified by the same reference numerals and explanations thereof will be omitted.

As shown in Fig. 13, the cylindrical member 85 consists of an outer cylinder 86 and an inner cylinder 87.

The outer cylinder 86, which is constituted by a stainless steel cylinder, has a thick-walled portion 86b from a nearly central position of an inner wall of the outer cylinder to one end side of the cylinder. On one end side of the outer cylinder 86 is formed a stepped portion 86a by the thick-walled portion 86b. The upper surface 36a and peripheral edge portion 3d of the stopper 36 are fitted in the stepped portion 86a.

The inner cylinder 87 is constituted by a cylindrical, porous, sintered compact of stainless steel.

On the opposite side of the outer cylinder 86 the inner cylinder 87 is fitted in the inner wall of the outer cylinder. The inner wall of the inner cylinder 87 and the thick-walled portion 86b of the outer cylinder 86 are formed so as to give the same inside diameter in the axial direction of the cylindrical member 85. Between the inner cylinder 87 and the outer cylinder 86 is formed a concave gap portion (recess) 92.

The wire spring 35 is disposed within the cylindrical member 85 so that the ring portion 35a of the wire spring is positioned in the inner space of the cylindrical member 85 and the end portions 35b of the wire spring are retained elastically within the gap portion (recess) 92.

How to attach the plug 101 to the optical fiber connector 80 thus constructed is the same as in the case of the optical fiber connectors 20 and 70 of the first and second embodiments described above. The wire spring 35 received in the cylindrical member 85 of the optical fiber connector 80 may be substituted by the wire spring 55 (see Fig. 8B) described above.

Further, an end of the thick-walled portion 86b of the outer cylinder 86 may be formed in such a shape as the projecting portion 62a of the cylindrical member 62 and the wire spring 60 (see Fig.8C) may be engaged with the projecting portion in the gap portion (recess) 92 of the cylindrical member 85.

The optical fiber connector 20 of the first embodiment constructed as above brings about the following effects.
1) When the ferrule 103 of the plug 101 is inserted into the inner cylinders 27a and 27b which have been fitted and fixed into the outer cylinder 26, even if there occurs a clearance between the inner walls of the inner cylinders and the ferrule 103, the wire spring 35 disposed in the gap portion (recess) 32 between the inner cylinders 27a and 27b presses the outer periphery of the ferrule in the radial direction under the action of its elastic biasing force and causes the ferrule outer periphery to come into abutment against predetermined portions of the inner walls of the inner cylinders 27a and 27b. Consequently, the plug 101 can be mounted in such a manner that the optical axis of the optical fiber 100 in the ferrule 103 and the optical axes of the optical element 42 and the lens 43 are aligned with each other. Thus, even in the case of a ferrule of a small diameter, it can be held firmly.
2) The fixed inner cylinders 27a and 27b are allowed to possess both function as reference surfaces for positioning the outer periphery of the ferrule and function for accommodating the ferrule, and the ferrule is held by sandwiching it between the positioning reference surfaces of the inner cylinders 27a and 27b and the wire spring 35 as an elastic member. Therefore, when the plug 101 is inserted into or removed from the optical fiber connector 20, there is attained a constant radial pressure against both ferrule 103 and optical fiber 100 incorporated in the ferrule, whereby variations in optical coupling by the optical fiber 100 in the optical fiber connector 20 can be suppressed.
3) Since the inner cylinders 27a and 27b are divided in two, they are axially shorter than the conventional sleeve 155, so that their inner walls can be finished with a high accuracy and that in a short time, thus making it possible to attain the reduction of cost.
4) Since the slit 28 is formed in the outer cylinder 26, an elastic deformation of the outer cylinder 26 permits easy insertion of the inner cylinders 27a and 27b into the outer cylinder. At the time of insertion and removal of the ferrule 103 into and from the cylindrical member 25, a radial deformation of the cylindrical member is prevented because the outer cylinder 26 and the inner cylinders 27a, 27b are fixed together by spot welding.
5) When the inner cylinders 27a and 27b are inserted into the outer cylinder 26 which can undergo elastic deformations, even if the outer periphery of the inner cylinder 27a and that of the outer cylinder 27b are somewhat different in size, an inward elastic force of the outer cylinder 26 permits the inner cylinders 27a and 27b to be positioned so that the respective axes are aligned with each other. Therefore, the cylindrical member 25 can be assembled in a simple and highly accurate manner.
6) Since the end portions 35b of the wire spring 35 are received within the gap portion (recess) 32 of the cylindrical member 25 and the ring portion 35a of the wire spring is projected into the inner space of the cylindrical member, insertion of the ferrule 103 results in the ring portion 35a moving radially, thus making it possible to press the outer periphery of the ferrule elastically without damage thereto.
7) Since the end portions 35b of the wire spring 35 are retained within the gap portion (recess) 32 of the cylindrical member 25 with the elastic biasing force of the wire spring, a circumferential rotation of the wire spring within the cylindrical member 25 can be prevented; besides, the wire spring need not be fixed by welding. Thus, no limitation is placed on the spring portion that gives rise to a holding force for the ferrule 103. Consequently, even if the ferrule 103 is small in diameter, it can be held firmly.
8) The wire spring 55 is formed by bending a single wire rod, and despite such a simple structure, it can firmly hold the outer periphery of the ferrule 103 inserted into the optical fiber connector 20.
9) In the cylindrical member 25 containing the inner cylinder 62 with the wire spring 60 engaged with the projecting portion 62a, since the wire spring 60 is engaged with the protuberance 62b of the projecting portion 62a, it does not come off easily even if an unnecessary force is imposed thereon from the exterior.
10) The wire springs 35, 55 and 60 are each accommodated within the cylindrical member 25 and thus are small components, not requiring a large space, and can hold the ferrule 103 firmly. Thus, it is possible to attain the reduction in size of the optical fiber connector 20.
11) In the optical communication module, by assembling the optical mechanism 40 in advance, the optical fiber connector 20 and the optical mechanism 40 can be fixed together easily by welding with use of YAG laser.

Instead of the light emitting element 42 a light receiving element such as photodiode may be incorporated in the optical mechanism 40 to constitute a light receiving communication module.

In the case of the optical fiber connector 70 according to the second embodiment, since the cylindrical member 75 is constituted by a single sintered compact of stainless steel, spot welding using YAG laser is not needed for the cylindrical member 75. All that is required is a mere insertion of the wire spring 35 into the cylindrical member 75. That is, the number of assembling steps required can be reduced.

In the optical fiber connector 80 of the third embodiment, it suffices for only the inner cylinder 87 to be constituted by a porous sintered compact of stainless steel. Dust can be received into the fine pores 30 in the initial stage of insertion of the ferrule 103, with no likelihood of the ferrule outer periphery being damaged by dust.

Further, since the wire spring 35 is sandwiched by merely inserting the inner cylinder 87 in one direction into the outer cylinder 86, if the wire spring 35 is inserted before the insertion of the inner cylinder 87, it becomes possible to effect the assembly of the optical fiber connector 80 more easily.

Although embodiments of the present invention have been described above, the present invention is not limited to those embodiments, but various modifications may be made within the scope not departing from the gist of the invention.

The optical fiber connector according to the present invention described above is provided with a receptacle housing and a cylindrical member disposed within the receptacle housing, with dust receiving pits being formed in the inner wall of the cylindrical member, a fiber holding portion provided at the tip of an optical fiber is inserted into the cylindrical member, allowing dust which has entered the interior of the cylindrical member to be received into the pits, the outer periphery of the fiber holding portion is brought into abutment against the inner wall of the cylindrical member, and the tip end of the optical fiber is secured to the receptacle housing. According to this construction, the fiber holding portion can be inserted smoothly into the cylindrical member without any fear of dust damaging the outer periphery of the fiber holding portion and the inner wall surface of the cylindrical member.

Moreover, since at least the inner wall of the cylindrical member is formed by a porous material with innumerable pits formed therein, the inner wall of the cylindrical member serves to receive dust therein while retaining a smooth surface. Accordingly, there is no fear that the outer periphery of the fiber holding portion and the inner wall surface of the cylindrical member may be damaged by dust, and it is possible to insert the fiber holding portion smoothly into the cylindrical member. Particularly, when the insertion and removal of the fiber holding portion into and from the cylindrical member are repeated, it is possible to keep constant the state of optical coupling.

Further, in the optical communication module according to the present invention, since an optical member for the emission or reception of light is fixed to the exterior of the receptacle housing of the optical fiber connector so that the optical axis of the optical fiber attached to the receptacle housing and that of the optical member are aligned with each other, the optical member and the optical fiber connector can be positioned and fixed in a simple manner, thus making it possible to greatly suppressing a total coupling loss of optical coupling.

## Claims

1. An optical fiber connector comprising: a receptacle housing; and a cylindrical member disposed within the receptacle housing, with pits for taking dust therein being formed in an inner wall of the cylindrical member, wherein:
a fiber holding portion provided at a tip end of an optical fiber is inserted into the cylindrical member, allowing dust which has entered the cylindrical member to be received within the pits, an outer periphery of the optical fiber holding portion is brought into abutment against the inner wall of the cylindrical member, and the tip end of the optical fiber is attached to the receptacle housing.

2. An optical fiber connector according to claim 1, wherein at least the inner wall of the cylindrical member is formed of a porous material, and the pits formed of the porous material are formed innumerably.

3. An optical fiber connector according to claim 2, wherein the porous material is a sintered compact of a metal or a ceramic material.

4. An optical communication module using the optical fiber connector described in any of claims 1 to 3, wherein an optical member which emits or receives light is fixed to the exterior of the receptacle housing, and an optical axis of the optical fiber attached to the receptacle housing and an optical axis of the optical member are aligned with each other.
